# EUROPEAN PATENT SPECIFICATION

(11) **EP 3 291 186 B1**
(45) Date of publication and mention of the grant of the patent: **08.12.2021**
(21) Application number: 17171043.7
(22) Date of filing: 15.05.2017
(51) Int. Cl.: G07D 7/16, G07D 7/04, G07D 7/12

(54) **A BANK NOTE HANDLING MACHINE**
BANKNOTENHANDHABUNGSMASCHINE
MACHINE DE MANIPULATION DE BILLETS DE BANQUE

(30) Priority: 19.05.2016 SE 1650675
(43) Date of publication of application: 07.03.2018
(73) Proprietor: SCAN COIN AB, 213 75 Malmö (SE)
(72) Inventor: CHAPPUIS, Eric, 1673 Promasens (CH); WONG, Tsun Pong, Kwun Tong (HK)
(74) Representative: AWA Sweden AB

(56) References cited:
- DE-A1- 4 404 872
- DE-A1-102009 034 441
- US-A- 5 905 810
- US-A1- 2005 256 807
- US-A1- 2006 115 139

## Description

### Field of the invention

The present disclosure relates to an apparatus and method for a bank note handling. More specifically, the disclosure relates to an apparatus and method for a bank note handling machine.

### Background art

Bank note handling machines are used to automatically handle bank notes, typically several at once in the form of a stack of bank notes. Bank note handling machines are often used in banks, exchange offices, stores or the like. When a stack of bank notes are administered to the machine by a user, the machine is typically able to perform one or more operations from, sorting the bank notes according to denomination, counting the total sum of money in the stack of bank notes and checking for counterfeit bank notes issuing a warning to the user.

It is important that bank note handling machines are able to perform the operation fast as well as accurately. Thus, the machines are typically quite advanced and comprise a plurality of sub units each arranged to perform dedicated tasks to fulfill the above described purposes of operation. The importance of accurately validating the authenticity of the bank notes is often evident from the complexity of the multi-faceted approaches used for the purpose. One example of a bank note handling machine is provided in US 6,908,029 B2, which is herein incorporated by reference in its entirety.

US 6,908,029 B2 discloses a bill counter comprising a bill loading section where plural bills are loaded, a feeding means for feeding the above bills individually, a transfer means for transferring the above bills fed by the above feeding means to a collecting section, and an authenticity/counterfeit determining means arranged between the above feeding means and the above collecting section and comprising plural kinds of detectors with different determining principles for determining whether the above bills are authentic or not.

US 2005/256807 A1 discloses an apparatus, system, and method for authenticating a scanned document. The apparatus includes an ultraviolet (UV) illumination source, a photosensor array, an image processing module, and an image verification module. The UV illumination source illuminates a document having a UV image printed thereon. The photosensor array senses the UV image while the document and UV image are illuminated by the UV illumination source. The image processing module digitally processes the sensed UV image. The image verification module compares the processed UV image with a corresponding benchmark image to determine if the scanned document is authentic.

US 5 905 810 A discloses an apparatus for currency discrimination that comprises first and second stationary scanheads, disposed on opposite sides of a bill transport path, for scanning respective first and second opposing surfaces of a bill traveling along the bill transport path and for producing respective output signals.

DE 10 2009 034441 A1 discloses a cashier apparatus, in particular a cash register with counterfeit money recognition for use at cash registers in supermarkets and other shops. The cashier apparatus includes a counterfeit determination unit comprising a UV source arranged in the housing.

DE 44 04 872 A1 discloses an apparatus where banknotes are checked by using ultraviolet light to illuminate fluorescent colours used in authentic banknotes.

US 2006/115139 A1 discloses an apparatus which provides both automatic and manual authentication of banknotes, the manual authentication being based on the detection of fluorescence when the banknote is illuminated with ultra violet light.

A problem with the bank note handling machines of the art is that they sometimes fail to perform their task sufficiently fast. One reason for this can be that the note validation unit sometimes provides erroneous decisions to not accept authentic bank notes. The user may then have to, repeatedly, input the same bank note to the machine over and over again until the machine finally approves of the bank note and may complete the bank note handling operation.

On some bank note handling machines comprising a single output position for all notes, the identification of a bank note not accepted by the note validation unit effectively halts the bank note handling operation until the user has been able to manually remove the bank note. Apart from the removal of the bank note, this may also involve pressing a restart button on the machine for it to commence operation. Such manual operation significantly delays the overall note handling operation.

The aforementioned problem will be especially cumbersome if large quantities of bank notes are not accepted by the note validation unit. This may be common in some countries and regions in the world where the bank notes are less frequently replaced by the entity issuing the bank notes. This may result in a substantial fraction of the bank notes in circulation being in a bad shape, e.g. dirty and/or worn. When the bank notes are in bad shape, the risk increases of erroneous decisions to not accept authentic bank notes.

### Summary

It is an object to mitigate, alleviate or eliminate one or more of the above-identified deficiencies in the art and disadvantages singly or in any combination.

According to a first aspect, these and other problems are solved in full, or at least in part, by a bank note handling machine according to claim 1 comprising: a housing; a note input unit arranged to receive a bank note in an input position; a note output unit arranged to output the bank note in an output position; a transport device arranged to transport the bank note from the input position to the output position; a note validation unit arranged internally within the housing, said note validation unit being configured to sense a characteristic of the bank note when the bank note is in the input position, the output position or a position in-between, wherein the sensed characteristic is used for determination whether to accept the bank note; characterized in that the machine further comprises a counterfeit determination unit comprising a UV source, said counterfeit determination unit being arranged in the housing such that the UV source emits ultraviolet (UV) radiation externally to the housing, allowing a bank note to be manually authenticated.

According to the invention, the bank note handling machine comprises a counterfeit determination unit comprising a UV source emitting UV radiation externally to the housing. This allows for a bank note to be manually authenticated by a user. Thus, the user may manually confirm whether the bank note is authentic and, if the bank note is not authentic, the user need not re-insert the bank note into the bank note handling machine. If, on the other hand, the user is not able to confirm that the bank note is not authentic, the user may re-insert the bank note in the input position such that the bank note may be transported through the note validation unit once more and possibly accepted. Thanks to the possibility to manually authenticate bank notes the user need not re-insert bank notes numerous times, when the bank notes are actually not authentic.

Manual authentication of a bank note may involve that a bank note is manually presented and/or arranged in a position to receive UV radiation, such that a response to the UV radiation may be measured by a detector in the counterfeit determination unit. Alternatively, manual authentication of a bank note may involve that the bank note is arranged in a position externally to the housing to receive UV radiation such that a user may draw a conclusion regarding the authenticity of the note by ocularly assessing the response of the bank note to UV radiation.

This is advantageous as it allows for the user to check individual notes in order to speed up the note handling operation. This may be carried out in many ways.

For example, if a user of a bank note handling machine receives a stack of bank notes from a customer or the like, the user may dispose the stack of bank notes in the input position of the note input unit and initiate the automatic note sorting and counting operation. If the machine, by the validation unit, triggers a warning to the user that an allegedly counterfeit note has been found, the user may manually investigate the bank note using the counterfeit determination unit. This may allow for the user to determine if the note is indeed counterfeit or if the note is merely worn and/or dirty. If the note is deemed to be false, it may be removed. If deemed to be authentic, the note may be placed for a second time in the input position of the input unit to pursue a second attempt to automatically count and sort the note. Prior to inserting the note for a second time, the user will have the option to preprocess the note, for example by attempting to remove dirt by cleaning the note. The user may, alternatively, decide to not insert the note into the machine and instead handle it manually.

The user may also use the counterfeit determination unit prior to inserting the stack of notes into the machine. For example, the user may, with a trained eye, remove some of the notes from the stack, investigating said removed notes using the counterfeit determination unit, decide on which of the investigated notes to handle manually and which to put back into the stack, prepare the stack and place the stack in the input position of the input unit of the machine for automatic counting and sorting.

Independent on methodology, the speed of the note handling operation will increase. Increase of the speed may be more substantial in a case where a significant number of dirty and/or worn notes are present in the stack.

As used herein, "bank note handling machine" should be construed as any machine which may receive and output bank notes. The bank notes are to be validated and the bank note handling machine may thus, during validation count and/or sort the bank notes. The bank notes may thus be output in a sorted manner by denomination and/or bank notes that are not authenticated may be separated from authentic bank notes. Further, the bank note handling machine may present a total value of counted bank notes. The bank note handling machine is typically aimed for professional use, wherein a large number of bank notes are to be handled for fast counting and/or sorting. The bank note handling machine does not store bank notes. Rather, the bank notes received in the input position are also output to the output position, possibly in a sorted manner.

According to the invention the bank note handling machine further comprises a control unit, which is arranged to transmit a signal to trigger the UV source to emit UV radiation, in response to a determination that the bank note is not accepted.

This implies that the UV source is turned on automatically in a case when a bank note, by the validation unit, has been deemed as counterfeit. This may be advantageous as it effectively reduces the time needed to manually authenticate a bank note using the counterfeit determination unit. The user does not have to manually turn on the UV source and, if applicable dependent on the type of UV source used, await the UV source warm-up. Thus it allows for an efficient work flow when operating the machine. The onset of UV radiation may also serve as a visual reminder for the user that a manual authentication will be needed, with the visual reminder originating from the UV source itself, which typically emits a fraction of its radiation in the visible blue/violet region.

According to one embodiment, the control unit is arranged to receive at least one measurement of sensed characteristics from the note validation unit and to process the at least one measurement to determine whether to accept the bank note. In case the control unit receives at least one measurement of sensed characteristics from the note validation unit and, by processing it, interprets the signal as an order not to accept the bank note, the control unit may in one embodiment send a trigger signal to the UV source pertaining to turn on the UV source. Thus, processing of measurements acquired by the note validation unit may be performed by the control unit.

However, it should be realized, that the note validation unit may alternatively process acquired measurements to determine whether the bank note is to be accepted and may simply send a signal to the control unit indicating when a bank note is not accepted. Hence, the control unit may not necessarily process acquired measurements, but may rather trigger the UV source when receiving a signal from the note validation unit that a bank note is not accepted.

According to one embodiment, the note output unit comprises an acceptance position and a rejection position and is arranged to output the bank note in the acceptance position, if the bank note is accepted, or in the rejection position, if the bank note is not accepted.

This implies that the bank note handling operation does not have to seize awaiting user input. The bank note handling operation will thus commence faster. Additionally or alternatively it may be advantageous as the user will be presented with all the non-accepted bank notes in one stack. This simplifies the manual authentication of non-accepted bank notes using the counterfeit determination unit. Further, the control unit may thus be arranged to send a signal to trigger the UV source once all bank notes in a stack have passed through the note validation unit and it is determined that at least one bank note in the stack is not accepted.

According to one embodiment, the counterfeit determination unit is arranged in vicinity of the output position. This is advantageous as it allows for simplifying the process of manual inspection using the counterfeit determination unit. The counterfeit determination unit is thus close to a position where the bank note to be manually authenticated is output.

According to one embodiment, the counterfeit determination unit is arranged in vicinity of the rejection position. Thus, if the bank note handling machine comprises a rejection position where non-accepted bank notes are output, the counterfeit determination unit is close to the position of output of non-accepted bank notes. This is advantageous as it allows for simplifying the process of manual inspection using the counterfeit determination unit.

According to one embodiment, the counterfeit determination unit is arranged such as to allow a direct illumination of the rejection position. This may preferably be realized by the counterfeit determination unit being arranged above the rejection position. This may allow inspection of at least the uppermost bank note in a stack of bank notes residing in the rejection position to be investigated without having to manually remove the bank note.

According to one embodiment, the note output unit comprises one output position, in which all bank notes having been handled by the bank note handling machine are arranged to be output. The bank note handling machine may in one embodiment be arranged to stop the bank note handling operation once a bank note is not accepted by the note validation unit. This may imply that the not accepted bank note would end up to be the uppermost bank note in the stack of bank notes residing in the output position.

The counterfeit determination unit may in one embodiment be arranged in vicinity of the output position. According to one embodiment, the counterfeit determination unit is arranged such as to allow a direct illumination of the output position. This may preferably be realized by the counterfeit determination unit being arranged above the output position. This may allow inspection of at least the uppermost bank note in a stack of bank notes residing in the output position to be investigated without having to manually remove said bank note.

According to one embodiment, the counterfeit determination unit is arranged at a bottom of the housing. This may be advantageous as it allows the user to authenticate bank notes independently of the automatic bank note handling operation of the bank note handling machine, i.e. that the UV radiation of the counterfeit determination unit does not interfere with measurements acquired by the note validation unit, and vice versa. Also, the bank note handling machine may typically be arranged to stand on a table, which implies that it may be convenient for a user to present a bank note at a bottom of the housing.

According to one embodiment, the counterfeit determination unit further comprises a sensor for sensing optical radiation originating from the bank note to be authenticated as a result from an interaction between the UV radiation and the bank note. For instance, the sensor may be arranged to sense at least wavelengths including blue light. Counterfeit bank notes made on relatively simple paper may tend to fluoresce in the blue region of light when illuminated by UV radiation. Thus, if the sensor detects blue light, the sensor may determine that the bank note is not authentic.

According to one embodiment, the bank note handling machine further comprises an activator for allowing the UV source to be manually activated. Thus, a user may manually activate the UV source, whenever it is desired that a manual authentication is to be performed. For instance, the UV source may be activated before a note is input into the bank note handling machine, if the user by manual inspection suspects that the bank note is not authentic. In one embodiment the activator is a button.

According to one embodiment, the note input unit is arranged to receive a stack of bank notes and the note output unit is arranged to output at least one stack of bank notes. Thus, the bank note handling machine is able to handle a plurality of bank notes input to the bank note handling machine in the form of a stack.

According to one embodiment, the note validation unit comprises at least one sensor, which is arranged to detect at least one property in the group of: a physical measure of the bank note, a print on the bank note, an optical signal response of the bank note when exposed to electromagnetic radiation, and a magnetic signature of the bank note.

The note validation unit may comprise one or more sensors which are arranged in the housing to sense a characteristic of the bank note. The sensed characteristic may be a response to a signal emitted by a source of the validation unit or a property provided to an area which the note passes. For instance, the note validation unit may emit an electromagnetic signal, and a reflection or transmission of the signal may be measured by the one or more sensor, or an image may be acquired of the bank note when the bank note is illuminated by the emitted electromagnetic signal. Alternatively, an electric current or a magnetic field may be provided by the note validation unit and a characteristic, such as resistivity, of the note may be measured by the one or more sensor.

By means of the note validation unit being arranged internally within the housing, the note will need to be at least partially within the housing in order for the one or more sensor to be able to sense the characteristic of the note.

A physical measure may in one embodiment be the width and height of the bank note. A physical measure may in one embodiment be the thickness of the bank note. A physical measure may in one embodiment be a measure of a physical object integral with the bank note, such as for example one or more thread made from metal or polyester.

A print may in one embodiment comprise a set of dots in a pattern. A print may in one embodiment comprise visual objects such as for example lines, squares, letters, or the like. The print may be detected by means of acquiring an image of the bank note, whereby the image may be processed to determine whether the print is present and/or a pattern of the print.

An optical signal response of the bank note when exposed to electromagnetic radiation may in one embodiment comprise the use of ultraviolet radiation to induce a fluorescent response from the paper material of the bank note. In one embodiment the fluorescent response is spectrally resolved to determine the composition of the bank note. The optical signal response may in one embodiment comprise electromagnetic radiation reflected on at least a part of the illuminated surface of the bank note. The optical signal response may in one embodiment comprise electromagnetic radiation transmitted through at least a part of the bank note.

According to a second aspect, there is provided a method for handling bank notes according to claim 11, said method comprising: receiving a bank note in an input position of a bank note handling machine; transporting the bank note from the input position to an output position of the bank note handling machine; sensing a characteristic of the bank note when the bank note is in the input position, the output position or a position in-between; determining based at least on the sensed characteristic whether to accept the bank note; on condition that said determining finds that the bank note is not to be accepted, triggering a UV source of the bank note handling machine to emit UV radiation externally to a housing of the bank note handling machine, allowing the bank note to be manually authenticated.

The method allows for a bank note which was not accepted to be directly and easily authenticated by a user without having to manually switch on the UV source of the bank note handling machine.

### Brief descriptions of the drawings

The invention will by way of example be described in more detail with reference to the appended schematic drawings, which shows presently preferred embodiments of the invention.
Figure 1 shows a schematic side view of a bank note handling machine according to a first example embodiment of the present disclosure.
Figure 2 shows a schematic side view of a bank note handling machine according to a second example embodiment of the present disclosure.
Figure 3 shows a schematic side view of a bank note handling machine according to a third example embodiment of the present disclosure.
Figure 4 shows a schematic side view of a bank note handling machine according to a fourth example embodiment of the present disclosure.
Figure 5 shows a flow chart of a method for handling bank notes according to an example embodiment of the present disclosure.

### Detailed description

The present invention will now be described more fully hereinafter with reference to the accompanying drawings, in which currently preferred embodiments of the invention are shown. These embodiments are provided for thoroughness and completeness, and fully convey the scope of the invention to the skilled person, according to the appended claims.

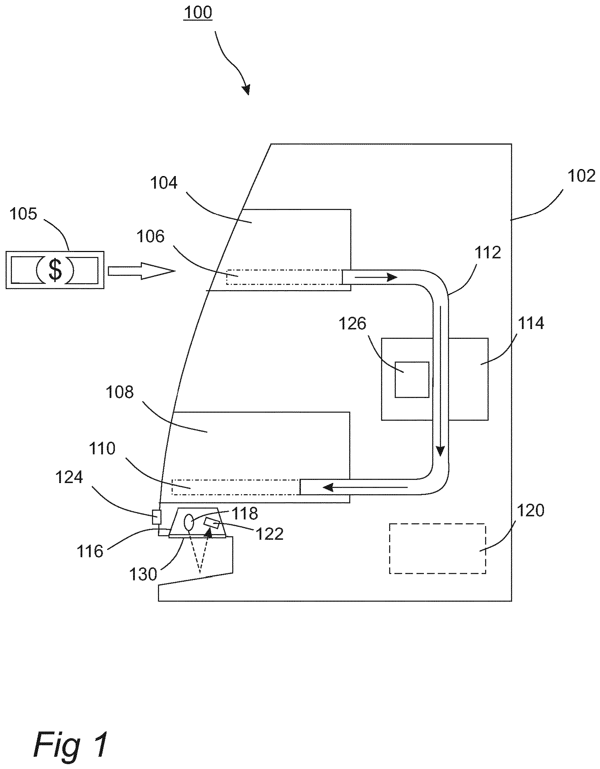

Referring to Fig. 1, a bank note handling machine 100 is shown according to a first example embodiment. The bank note handling machine 100 comprises a housing 102. The machine 100 further comprises a note input unit 104 arranged to receive a bank note 105 in an input position 106. The note input unit 104 and the housing 102 are arranged such as to allow a user to manually dispose the bank note 105 in the input position either directly or by aid of a secondary mechanism such as for example gravitational forces acting on the bank notes and/or an active means. The machine 100 further comprises a note output unit 108 arranged to output the bank note 105 in an output position 110. The note output unit 108 and the housing 102 are arranged such as to allow a user to retrieve the bank note directly from the output position 110.

The machine 100 further comprises a transport device 112 arranged to transport the bank note 105 from the input position 106 to the output position 110. The transport device 112 may comprise a plurality of rotating rolls working together to transport the bank note 105 inside the machine 100. The transport device 112 may also comprise one or more rotating brushes. The transport of bank notes 105 within the machine is not explicitly disclosed herein. It should be understood that many alternative ways exist for achieving the transport within the scope of the claims, as will be appreciated by a person skilled in the art.

The machine 100 further comprises a note validation unit 114 arranged internally within the housing 102. The note validation unit 114 may be configured to sense a characteristic of the bank note 105 when the bank note 105 is in the input position 106, the output position 110 or a position in-between. The sensed characteristic is used for determination whether to accept the bank note 105.

The bank note handling machine 100 further comprises a counterfeit determination unit 116 comprising a UV source 118. The counterfeit determination unit 116 is arranged in the housing 102 such that the UV source 118 emits ultraviolet (UV) radiation externally to the housing 102, allowing a bank note 105 to be manually authenticated. A portion of the housing 102 may be made from an optically transparent material allowing for the UV radiation to penetrate the housing 102 to reach the manually inserted bank note 105. In the embodiment shown in Fig. 1, this is realized by the use of a UV-transparent glass 130.

The bank note 105 is thus arranged to be illuminated with UV radiation when manually presented to the counterfeit determination unit 116. This implies that a user may manually determine whether the UV radiation induces fluorescence by the bank note 105. If so, the user may determine that the bank note 105 is not authentic and may withdraw the bank note 105 from further handling.

The bank note handling machine 100 further comprises a control unit 120, which is arranged to transmit a signal to trigger the UV source 118 to emit UV radiation, in response to a determination that the bank note 105 is not accepted. The control unit 120 is arranged to receive at least one measurement of sensed characteristics from the note validation unit 114 and to process the at least one measurement to determine whether to accept the bank note 105. This may allow for the machine 100 to automatically activate the UV source 118 within the counterfeit determination unit 116 when it is needed. Also, absence of a trigger signal from the control unit 120 may allow the counterfeit determination unit 116 to keep the UV source 118 deactivated, hence avoiding unnecessary UV radiation in an environment in which the bank note handling machine 100 is arranged and reducing power consumption of the bank note handling machine 100.

The determination whether to accept the bank note 105 may be performed by the note validation unit 114. If so, the note validation unit 114 may send a signal whether a note is accepted or not to the control unit 120, which may directly decide whether to trigger the UV source 118 in dependence on the signal received from the note validation unit 114. Alternatively, the determination may be performed by a control unit 120 after having received a measurement reading pertaining to a sensed characteristic from the note validation unit 114.

The control unit 120 may comprise a processing unit. The control unit 120 may receive input from sensors in the machine 100 and may execute processing instructions for determining how bank notes are to be handled in view of the sensed input. The control unit 120 may also be arranged to send control signals to different machine parts, so as to control function of the machine parts, such as activating or deactivating a motor for driving the transport device 112. The control unit 120 may also register counting of bank notes 105 performed by the machine 100 and may communicate information on such counts and/or information on a status of the machine to an external computer system.

Also, the control unit 120 may communicate with a display (not shown) for presenting a result of counting of bank notes 105 on the display. The control unit 120 may also communicate other information, such as any errors in functionality of the machine 100, for output on the display.

The processing unit of the control unit 120 may be implemented as a microprocessor, which may be programmable for controlling operation of the microprocessor. For instance, the processing unit may be a central processing unit (CPU). The processing unit may alternatively be a special-purpose circuitry for providing only specific logical operations. Thus, the processing unit may be provided in the form of an appliation-specific integrated circuit (ASIC), an application-specific instruction-set processor (ASIP) or a field-programmable gate array.

The control unit 120 may further comprise a non-volatile memory for storing information, such as instructions for controlling operation of the processing unit. For instance, the control unit 120 may store information relating to bank notes 105 to be validated, such that the control unit 120 is able to recognize and validate the types of notes for which information is available.

The control unit 120 may further comprise a communication unit for sending control signals, in order to control functionality of other components of the machine 100. The control unit 120 may be arranged to control the transport device 112, the note validation unit 114, the counterfeit determination unit 116, etc. Also, the communication unit may receive information relating to bank notes 105 from an external computer system for updating functionality of the bank note handling machine 100.

The note input unit 106 may be arranged to receive more than one bank note 105. Preferably, the note input unit 106 may be arranged to receive a stack of bank notes and the note output unit 110 may be arranged to output one stack of bank notes. In essence, this allows for large quantities of bank notes to be handled by the bank note handling machine 100. Typically, the bank note handling machine 100 performs specific operations such as sorting and counting the denomination of the bank notes.

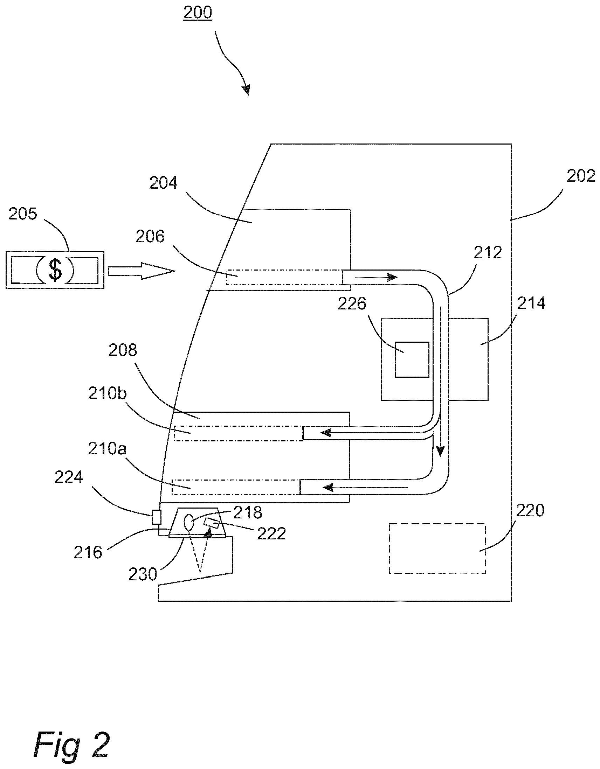

The first example embodiment shown in Fig. 1 only comprises one position to which the bank note may be disposed, i.e. the output position 110. Thus, in this embodiment, all bank notes 105 handled by the machine 100, both the bank note 105 accepted by the note validation unit 114 and the bank notes 105 not accepted by the note validation unit 114, will end up at the same position. In a second example embodiment, shown in Fig. 2, the bank note 205 is output in separate positions dependent on the determination made by the note validation 214. In the second embodiment, the output unit 208 of the bank note handling machine 200 comprises an acceptance position 210a and a rejection position 210b and is arranged to output the bank note 205 in the acceptance position 210a, if the bank note 205 is accepted, or in the rejection position 210b, if the bank note 205 is not accepted.

In the first and second embodiments disclosed hereinabove, with reference to Figs 1 and 2, the counterfeit determination unit 116, 216 is arranged at a bottom of the housing 102, 202. The position of the counterfeit determination unit may for other embodiments advantageously be located in vicinity of the output unit.

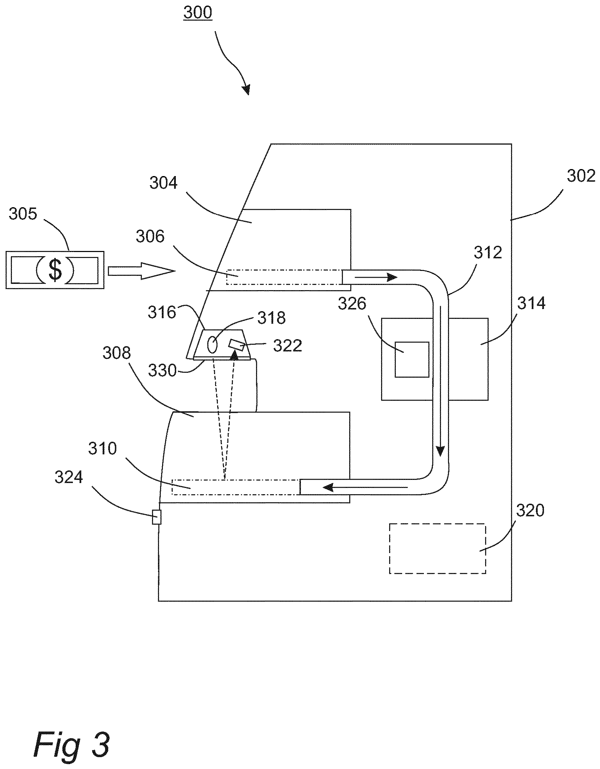

Referring to Fig. 3, a bank note handling machine 300 is shown according to a third example embodiment. In the bank note handling machine 300 the counterfeit determination unit 316 is arranged in vicinity of the output position 310. More specifically, the counterfeit determination unit 316 is arranged above the output position 310. This implies that a bank note 305 located in the output position 310 may be irradiated with UV radiation by the UV source 318 which is a part of the counterfeit determination unit 316 without the user having to remove the bank note 305 from the output position 310.

As a further alternative, the user may present the bank note to the counterfeit determination unit 316 in the vicinity of the output position 310, e.g. above the output position 310. However, thanks to the counterfeit determination unit 316 being arranged in the vicinity of the output position 310, the user may only need to move the bank note 305 a short distance.

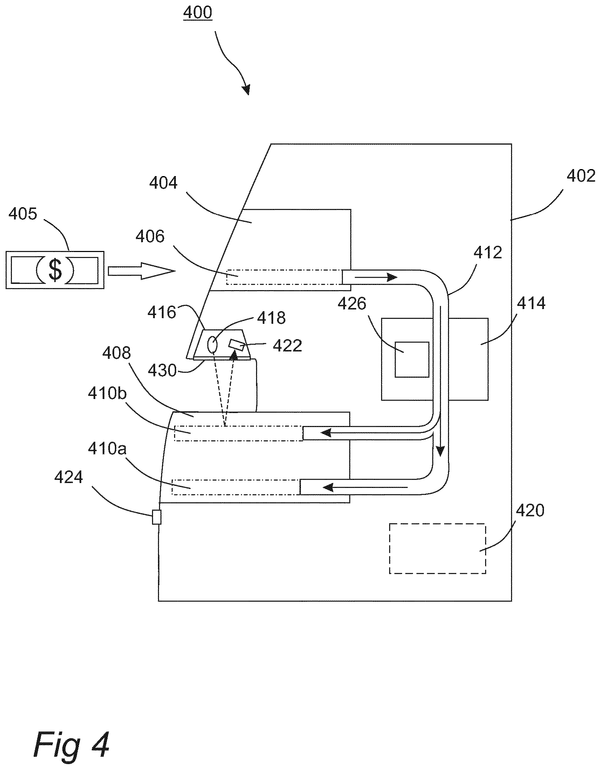

A similar arrangement may be devised for a bank note handling machine comprising more than one position in which bank notes may be output. Referring to Fig. 4, a bank note handling machine 400 is shown according to a fourth example embodiment. In the bank note handling machine 400 the counterfeit determination unit 416 is arranged in vicinity of the rejection position 410b. More specifically, the counterfeit determination unit 416 is arranged above the rejection position 410b. This implies that a bank note 405 located in the rejection position 410b may be irradiated with UV radiation by the UV source 418 which is a part of the counterfeit determination unit 416 without the user having to remove the bank note 405 from the rejection position 410.

The counterfeit determination unit 116, 216, 316, 416 may further comprise a sensor 122, 222, 322, 422 for sensing optical radiation originating from the bank note to be authenticated as a result from an interaction between the UV radiation and the bank note 105, 205, 305, 405. The optical radiation may be fluorescence induced from one or more materials constituting the bank note 105. Alternatively or additionally, it may be specular reflections from the surface of the bank note.

The bank note handling machine 100, 200, 300, 400 may further comprise an activator 124, 224, 324, 424 for allowing the UV source to be manually activated. Such an activator may be for example a button, a switch, or a lever which may be moved between two positions. By pressing the button the user will not be dependent on the machine to make use of the counterfeit determination unit 116, 216, 316, 416. For example, the user might wish to test a bank note from another set of bank notes than the set handled by the machine at a specific time.

The note validation unit 114, 214, 314, 414 may comprise at least one sensor 126, 226, 326, 426, which is arranged to detect at least one property in the group of: a physical measure of the bank note 105, 205, 305, 405, a print on the bank note 105, 205, 305, 405, and a magnetic signature of the bank note 105, 205, 305, 405. It should be understood that many alternative ways exist for validating bank notes within the scope of the claims, as will be appreciated by a person skilled in the art.

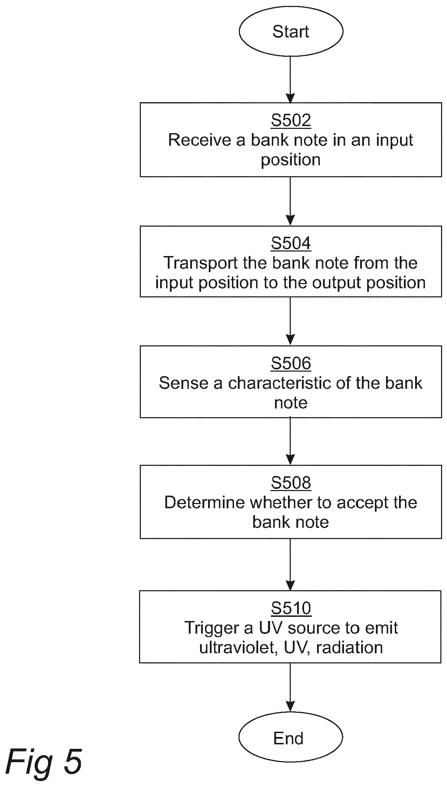

Referring to Fig. 5, a method for handling bank notes will be described. The method comprises receiving a bank note 105 in an input position 106 of a bank note handling machine 100, step S502. The bank note 105 is then transported, step S504, from the input position 106 to an output position 110 of the bank note handling machine 100. Then, a characteristic of the bank note 105 is sensed, step S506, said sensing occurring when the bank note 105 is in the input position 106, the output position 110 or a position in-between. Then, based at least on the sensed characteristic, it is determined, step S508, whether to accept the bank note 105. On condition that said determination results in that that the bank note 105 is not to be accepted, a UV source 118 of the bank note handling machine 100 is triggered, step S510, to emit UV radiation externally to a housing 102 of the bank note handling machine 100, allowing the bank note 100 to be manually authenticated.

The embodiments herein are not limited to the above described examples. Various alternatives, modifications and equivalents may be used. Therefore, this disclosure should not be limited to the specific form set forth herein. This disclosure is limited only by the appended claims and other embodiments than the mentioned above are equally possible within the scope of the claims.

## Claims

1. A bank note handling machine (100) comprising:
a housing (102);
a note input unit (104) arranged to receive a bank note (105) in an input position (106);
a note output unit (108) arranged to output the bank note (105) in an output position (110);
a transport device (112) arranged to transport the bank note (105) from the input position (106) to the output position (110);
a note validation unit (114) arranged internally within the housing (102), said note validation unit (114) being configured to sense a characteristic of the bank note (105) when the bank note (105) is in the input position (106), the output position (110) or a position in-between, wherein the sensed characteristic is used for determination whether to accept the bank note (105);
**characterized in that** the machine (100) further comprises a counterfeit determination unit (116) comprising a UV source (118), said counterfeit determination unit (116) being arranged in the housing (102) such that the UV source (118) emits ultraviolet, UV, radiation externally to the housing (102), allowing a bank note (105) to be manually authenticated, wherein the machine further comprises a control unit (120), which is arranged to transmit a signal to trigger the UV source (118) to emit UV radiation, in response to a determination that the bank note (105) is not accepted.

2. The bank note handling machine (100) according to claim 1, wherein the control unit (120) is arranged to receive at least one measurement of sensed characteristics from the note validation unit (114) and to process the at least one measurement to determine whether to accept the bank note (105).

3. The bank note handling machine (200,400) according to any one of the preceding claims, wherein the note output unit (208,408) comprises an acceptance position (210a,410a) and a rejection position (210b,410b) and is arranged to output the bank note (205,405) in the acceptance position (210a,410a), if the bank note (205,405) is accepted, or in the rejection position (210b,410b), if the bank note (205,405) is not accepted.

4. The bank note handling machine (300) according to claim 1-2,
wherein the counterfeit determination unit (316) is arranged in vicinity of the output position (310).

5. The bank note handling machine (400) according to claim 3, wherein the counterfeit determination unit (416) is arranged in vicinity of the rejection position (410b).

6. The bank note handling machine (100,200) according to any one of claims 1-4, wherein the counterfeit determination unit (116,216) is arranged at a bottom of the housing (102,202).

7. The bank note handling machine (100,200,300,400) according to any one of the preceding claims, wherein the counterfeit determination unit (116,216,316,416) further comprises a sensor (122,222,322,422) for sensing optical radiation originating from the bank note to be authenticated as a result from an interaction between the UV radiation and the bank note (105,205,305,405).

8. The bank note handling machine (100,200,300,400) according to any one of the preceding claims, further comprising an activator (124,224,324,400) for allowing the UV source to be manually activated.

9. The bank note handling machine (100,200,300,400) according to any one of the preceding claims, wherein the note input unit (106,206,306,406) is arranged to receive a stack of bank notes and the note output unit (110,210,310,410) is arranged to output at least one stack of bank notes.

10. The bank note handling machine (100,200,300,400) according to any one of the preceding claims, wherein the note validation unit (114,214,314,414) comprises at least one sensor (126,226,326,426), which is arranged to detect at least one property in the group of: a physical measure of the bank note (105,205,305,405), a print on the bank note (105,205,305,405), an optical signal response of the bank note when exposed to electromagnetic radiation, and a magnetic signature of the bank note (105,205,305,405).

11. A method for handling bank notes, said method comprising:
receiving (S502) a bank note (105) in an input position (106) of a bank note handling machine (100);
transporting (S504) the bank note (105) from the input position (106) to an output position (110) of the bank note handling machine (100);
sensing (S506) a characteristic of the bank note (105) when the bank note (105) is in the input position (106), the output position (110) or a position in-between;
determining (S508) based at least on the sensed characteristic whether to accept the bank note (105);
the method being **characterized in that:**
on condition that said determining finds that the bank note (105) is not to be accepted, triggering (S510), by a control unit (120) of the bank note handling machine (100), a UV source (118) of the bank note handling machine (100) to emit ultraviolet, UV, radiation externally to a housing (102) of the bank note handling machine (100), allowing the bank note (100) to be manually authenticated.

## Patentansprüche

1. Banknotenhandhabungsmaschine (100), die umfasst:
ein Gehäuse (102);
eine Noteneingabeeinheit (104), die angeordnet ist, um eine Banknote (105) in einer Eingabeposition (106) aufzunehmen;
eine Notenausgabeeinheit (108), die angeordnet ist, um die Banknote (105) in einer Ausgabeposition (110) auszugeben;
eine Transportvorrichtung (112), die angeordnet ist, um die Banknote (105) von der Eingabeposition (106) zu der Ausgabeposition (110) zu transportieren;
eine Notenvalidierungseinheit (114), die intern innerhalb des Gehäuses (102) angeordnet ist, wobei die Notenvalidierungseinheit (114) konfiguriert ist, um ein Kennzeichen der Banknote (105) zu erfassen, wenn die Banknote (105) in der Eingabeposition (106), in der Ausgabeposition (110) oder in einer Position dazwischen ist, wobei das erfasste Kennzeichen für eine Bestimmung darüber verwendet wird, ob die Banknote (105) anzunehmen sei;
**dadurch gekennzeichnet, dass** die Maschine (100) ferner eine Falschgeldbestimmungseinheit (116) umfasst, die eine UV-Quelle (118) umfasst, wobei die Falschgeldbestimmungseinheit (116) in dem Gehäuse (102) in der Weise angeordnet ist, dass die UV-Quelle (118) eine ultraviolette UV-Strahlung nach außen zu dem Gehäuse (102) abstrahlt, was einer Banknote (105) ermöglicht, manuell authentifiziert zu werden, wobei die Maschine ferner eine Steuereinheit (120) umfasst, die angeordnet ist, um ein Signal zu übertragen, um die UV-Quelle (118) anzusteuern, um eine UV-Strahlung als Antwortreaktion auf eine Bestimmung, dass die Banknote (105) nicht angenommen worden ist, abzustrahlen.

2. Banknotenhandhabungsmaschine (100) nach Anspruch 1, wobei die Steuereinheit (120) angeordnet ist, um mindestens eine Messung der erfassten Kennzeichen von der Notenvalidierungseinheit (114) aufzunehmen und um die mindestens eine Messung zu verarbeiten, um zu bestimmen, ob die Banknote (105) anzunehmen sei.

3. Banknotenhandhabungsmaschine (200, 400) nach einem der vorhergehenden Ansprüche, wobei die Notenausgabeeinheit (208, 408) eine Annahmeposition (210a, 410a) und eine Ablehnungsposition (210b, 410b) umfasst und angeordnet ist, um die Banknote (205, 405) in der Annahmeposition (210a, 410a) auszugeben, wenn die Banknote (205, 405) angenommen ist, oder in der Ablehnungsposition (210b, 410b) auszugeben, wenn die Banknote (205, 405) nicht angenommen ist.

4. Banknotenhandhabungsmaschine (300) nach Anspruch 1 bis 2, wobei die Falschgeldbestimmungseinheit (316) in der Nachbarschaft der Ausgabeposition (310) angeordnet ist.

5. Banknotenhandhabungsmaschine (400) nach Anspruch 3, wobei die Falschgeldbestimmungseinheit (416) in der Nachbarschaft der Ablehnungsposition (410b) angeordnet ist.

6. Banknotenhandhabungsmaschine (100, 200) nach einem der Ansprüche 1 bis 4, wobei die Falschgeldbestimmungseinheit (116, 216) auf dem Boden des Gehäuses (102, 202) angeordnet ist.

7. Banknotenhandhabungsmaschine (100, 200, 300, 400) nach einem der vorhergehenden Ansprüche, wobei die Falschgeldbestimmungseinheit (116, 216, 316, 416) ferner einen Sensor (122, 222, 322, 422) umfasst, um eine optische Strahlung, die von der Banknote ausgeht, zu erfassen, um als ein Ergebnis aus einer Wechselwirkung zwischen der UV-Strahlung und der Banknote (105, 205, 305, 405) authentifiziert zu werden.

8. Banknotenhandhabungsmaschine (100, 200, 300, 400) nach einem der vorhergehenden Ansprüche, die ferner einen Auslöser (124, 224, 324, 400) umfasst, um der UV-Quelle zu ermöglichen, manuell ausgelöst zu werden.

9. Banknotenhandhabungsmaschine (100, 200, 300, 400) nach einem der vorhergehenden Ansprüche, wobei die Noteneingabeeinheit (106, 206, 306, 406) angeordnet ist, um einen Stapel von Banknoten aufzunehmen, und wobei die Notenausgabeeinheit (110, 210, 310, 410) angeordnet ist, um mindestens einen Stapel von Banknoten auszugeben.

10. Banknotenhandhabungsmaschine (100, 200, 300, 400) nach einem der vorhergehenden Ansprüche, wobei die Notenvalidierungseinheit (114, 214, 314, 414) mindestens einen Sensor (126, 226, 326, 426) umfasst, der angeordnet ist, um mindestens eine Eigenschaft aus der folgenden Gruppe nachzuweisen: eine physikalische Messung der Banknote (105, 205, 305, 405), eine Eigenschaft von einem Abdruck auf der Banknote (105, 205, 305, 405), ein optisches Signal als Antwortreaktion auf die Banknote, wenn diese einer elektromagnetischen Strahlung ausgesetzt ist, und eine Eigenschaft von einer magnetischen Unterschrift der Banknote (105, 205, 305, 405).

11. Verfahren zur Handhabung von Banknoten, wobei das Verfahren Folgendes umfasst:
Aufnehmen (S502) einer Banknote (105) in einer Eingabeposition (106) einer Banknotenhandhabungsmaschine (100);
Transportieren (S504) der Banknote (105) von der Eingabeposition (106) zu der Ausgabeposition (110) der Banknotenhandhabungsmaschine (100);
Erfassen (S506) eines Kennzeichen der Banknote (105), wenn die Banknote (105) in der Eingabeposition (106), in der Ausgabeposition (110) oder in einer Position dazwischen ist;
Bestimmen (S508) auf der Grundlage mindestens des erfassten Kennzeichens darüber, ob die Banknote (105) anzunehmen sei;
wobei das Verfahren **dadurch gekennzeichnet ist, dass**:
unter der Bedingung, dass das Bestimmen zu dem Ergebnis führt, dass die Banknote (105) nicht angenommen werden kann, durch eine Steuereinheit (120) der Banknotenhandhabungsmaschine (100) ein Auslösen (S510) einer UV-Quelle (118) der Banknotenhandhabungsmaschine (100) veranlasst wird, um ultraviolette UV-Strahlung nach außen zu einem Gehäuse (102) der Banknotenhandhabungsmaschine (100) abzustrahlen. um der Banknote (105) zu ermöglichen, manuell authentifiziert zu werden.

## Revendications

1. Machine de manipulation de billets de banque (100) comprenant:
une enceinte (102);
une unité d'entrée de billets (104) conçue pour recevoir un billet (105) dans une position d'entrée (106);
une unité de sortie de billets (108) conçue pour sortir le billet (105) dans une position de sortie (110);
un dispositif de transport (112) conçu pour transporter le billet (105) de la position d'entrée (106) à la position de sortie (110);
une unité de validation de billets (114) disposée à l'intérieur de l'enceinte (102), ladite unité de validation de billets (114) étant conçue pour détecter une caractéristique du billet (105) lorsque le billet (105) est dans la position d'entrée (106), la position de sortie (110) ou une position intermédiaire, la caractéristique détectée étant utilisée pour déterminer s'il faut accepter le billet (105);
**caractérisée en ce que** la machine (100) comprend en outre une unité de détermination de contrefaçon (116) comprenant une source d'UV (118), ladite unité de détermination de contrefaçon (116) étant disposée dans le boîtier (102) de manière à ce que la source d'UV (118) émette à l'extérieur de l'enceinte (102) une radiation UV ultraviolette permettant d'authentifier manuellement un billet (105), la machine comprenant en outre une unité de commande (120) qui est conçue pour transmettre un signal pour déclencher la source d'UV (118) afin d'émettre une radiation UV en réaction à une détermination que le billet (105) n'est pas accepté.

2. Machine de manipulation de billets de banque (100) selon la revendication 1, dans laquelle l'unité de commande (120) est conçue pour recevoir au moins une mesure de caractéristiques détectées de la part de l'unité de validation de billets (114) et pour traiter l'au moins une mesure afin de déterminer s'il faut accepter le billet (105).

3. Machine de manipulation de billets de banque (200, 400) selon l'une quelconque des revendications précédentes, dans laquelle l'unité de sortie de billets (208, 408) comprend une position d'acceptation (210a, 410a) et une position de rejet (210b, 410b) et est conçue pour sortir le billet (205, 405) dans la position d'acceptation (210a, 410a) si le billet (205, 405) est accepté, ou dans la position de rejet (210b, 410b) si le billet (205, 405) n'est pas accepté.

4. Machine de manipulation de billets de banque (300) selon les revendications 1 et 2, dans laquelle l'unité de détermination de contrefaçon (316) est disposée à proximité de la position de sortie (310).

5. Machine de manipulation de billets de banque (400) selon la revendication 3, dans laquelle l'unité de détermination de contrefaçon (416) est disposée à proximité de la position de rejet (410b).

6. Machine de manipulation de billets de banque (100, 200) selon l'une quelconque des revendications 1 à 4, dans laquelle l'unité de détermination de contrefaçon (116, 216) est disposée dans un fond de l'enceinte (102, 202).

7. Machine de manipulation de billets de banque (100, 200, 300, 400) selon l'une quelconque des revendications précédentes, dans laquelle l'unité de détermination de contrefaçon (116, 216, 316, 416) comprend en outre un capteur (122, 222, 322, 422) pour détecter la radiation optique provenant du billet à authentifier en résultat d'une interaction entre la radiation UV et le billet (105, 205, 305, 405).

8. Machine de manipulation de billets de banque (100, 200, 300, 400) selon l'une quelconque des revendications précédentes, comprenant en outre un activateur (124, 224, 324, 400) pour permettre la source d'UV d'être activée manuellement.

9. Machine de manipulation de billets de banque (100, 200, 300, 400) selon l'une quelconque des revendications précédentes, dans laquelle l'unité d'entrée de billets (106, 206, 306, 406) est conçu pour recevoir une pile de billets et l'unité de sortie de billets (110, 210, 310, 410) est conçue pour sortir au moins une pile de billets.

10. Machine de manipulation de billets de banque (100, 200, 300, 400) selon l'une quelconque des revendications précédentes, dans laquelle l'unité de validation de billets (114, 214, 314, 414) comprend au moins un capteur (126, 226, 326, 426) qui est conçu pour détecter au moins une propriété dans le groupe composé: d'une mesure physique du billet (105, 205, 305, 405), d'une impression sur le billet (105, 205, 305, 405), d'une réaction à un signal optique du billet lorsqu'il est exposé à une radiation électromagnétique, et d'une signature magnétique du billet (105, 205, 305, 405).

11. Procédé de manipulation de billets, ledit procédé comprenant:
la réception (S502) d'un billet (105) dans une position d'entrée (106) d'une machine de manipulation de billets (100);
le transport (S504) du billet (105) de la position d'entrée (106) à une position de sortie (110) de la machine de manipulation de billets (100);
la détection (S506) d'une caractéristique du billet (105) lorsque le billet (105) est dans la position d'entrée (106), la position de sortie (110) ou une position intermédiaire ,
la détermination (S508), en se basant au moins sur la caractéristique détectée, s'il faut accepter le billet (105);
ce procédé étant **caractérisé en ce que**:
à la condition que ladite détermination trouve que le billet (105) ne doit pas être accepté, le déclenchement (S510), par une unité de commande (120) de la machine de manipulation de billets (100), d'une source d'UV (118) de la machine de manipulation de billets (100) pour émettre, à l'extérieur d'une enceinte (102) de la machine de manipulation de billets (100), une radiation UV ultraviolette permettant d'authentifier manuellement le billet (105).
